# EUROPÄISCHE PATENTSCHRIFT

(11) **EP 2 955 238 B1**
(45) Veröffentlichungstag und Bekanntmachung des Hinweises auf die Patenterteilung: **21.11.2018**
(21) Anmeldenummer: 15170407.9
(22) Anmeldetag: 03.06.2015
(51) Int. Cl.: C21D 9/48, C23C 2/02, C23C 2/12, C23C 2/28, C21D 9/56, C21D 9/60

(54) **VERFAHREN ZUR HERSTELLUNG EINES ALUMINIERTEN VERPACKUNGSSTAHLS**
METHOD FOR PRODUCING AN ALUMINIZED PACKAGING STEEL
PROCÉDÉ DE FABRICATION D'UN ACIER ALUMINÉ POUR EMBALLAGE

(30) Priorität: 13.06.2014 DE 102014108335
(43) Veröffentlichungstag der Anmeldung: 16.12.2015
(73) Patentinhaber: ThyssenKrupp Rasselstein GmbH, 56626 Andernach (DE); thyssenkrupp AG, 45143 Essen (DE)
(72) Erfinder: Gade, Dirk, 56073 Koblenz (DE); Sauer, Reiner, 56566 Heimbach-Weis (DE); Kaup, Burkhard, 56626 Andernach (DE); Köhl, Manuel, 56743 Mendig (DE)
(74) Vertreter: Charrier Rapp & Liebau

(56) Entgegenhaltungen:
- EP-A1- 1 829 981
- WO-A1-2004/104254
- WO-A1-2013/092170
- DE-B3-102013 101 847
- JP-A- H08 218 160
- JP-A- S56 108 831

## Beschreibung

Die Erfindung betrifft ein Verfahren zur Herstellung eines aluminierten Verpackungsstahls aus einem kaltgewalzten Stahlblech aus einem un- oder niedriglegierten Stahl.

Aluminiumbeschichtetes (aluminiertes) Stahlblech ist seit langem bekannt und wird beispielsweise durch Auftragen von flüssigem Aluminium in einem Schmelztauchverfahren (als Feueraluminierung bekannt) oder auch durch Aufwalzen einer Aluminiumfolie, durch Beschichten mittels Auftragen eines aluminiumhaltigen Precursors, wie beispielsweise eines Aluminiumalkyls hergestellt. In den bekannten Verfahren zur Feueraluminierung von Stahlblechen wird das Stahlblech in der Regel in einem Ofen, bspw. einem Durchlaufglühofen, erwärmt und dann in ein schmelzflüssiges Aluminiumbad mit einer BadTemperatur im Bereich von ca. 620°C eingetaucht. Durch den Einsatz von Aluminium als Beschichtungsmetall auf Stahlblechen und -bändern kann z.B. auf das kostspieligere und in seinem Vorkommen begrenzte Zinn als korrosionsbeständiges Beschichtungsmetall verzichtet werden.

Aus der US 3,820,368 ist bspw. ein Verfahren zum Beschichten eines Stahlblechs mit Aluminium in einem Schmelztauchverfahren bekannt, in dem ein Stahlblech mit einer Rockwell-Härte von 45 bis 75 (entsprechend einer Zugfestigkeit von ca. 278 - 450 MPa) in ein schmelzflüssiges Legierungsbad getaucht wird, wobei das Legierungsbad Aluminium und mehr als 3 % Silizium enthält. Die durch das Schmelztauchen des Stahlblechs erzeugte Beschichtung besteht aus einer Legierungsschicht mit wenigstens 5 µm Dicke und einer Aluminiumschicht mit wenigstens 5 µm Dicke, wobei die Gesamtdicke der Schicht zwischen 8 und 25 µm liegt. Das auf diese Weise hergestellte aluminierte Stahlblech kann in einem Abstreckziehverfahren zur Herstellung eines Dosenkörpers für eine zweiteilige Getränkedose verwendet werden.

An die Eigenschaften von metallischen Materialien zur Herstellung von Verpackungen werden zunehmend höhere Anforderungen gestellt, insbesondere hinsichtlich ihrer Umformbarkeit und ihrer Festigkeit. Die in dem Verfahren der US 3,820,368 verwendeten Stahlbleche mit einer Rockwell-Härte (H_{R}B) von 45 bis 75 erfüllen die Anforderungen an die Festigkeit und die Bruchdehnung von Verpackungsstählen für viele Anwendungen nicht. Aus der WO 2004/104254 ist ein Verfahren zur Beschichtung eines Dualphasen-Stahlblechs mit Aluminium in einem Tauchverfahren bekannt, wobei ein kaltgewalztes Stahlblech zunächst rekristallisierend geglüht und anschließend mit einer Kühlrate von mehr als 2°C/s auf eine Temperatur gekühlt wird, die der Temperatur des Aluminium-Tauchbads entspricht, welche zwischen 650 - 720°C liegt. Nach dem Aufbringen der Aluminiumschicht in dem Aluminium-Tauchbad wird das aluminisierte Stahlblech wiederum mit einer Kühlrate von mehr als 2°C/s auf Raumtemperatur gekühlt. Dabei bildet sich in dem Stahlblech eine Mikrostruktur aus Ferrit und Martensit aus.

Aufgabe der vorliegenden Erfindung ist die Bereitstellung eines zinnfreien Verpackungsstahls, der hinsichtlich seiner Korrosionsbeständigkeit, Festigkeit und Umformbarkeit vergleichbar mit den aus dem Stand der Technik für Verpackungszwecke vielfältig verwendeten Weißblechen ist. Der gewünschte Verpackungsstahl soll weiterhin neben einer hohen Korrosionsbeständigkeit und einer hohen Festigkeit gute Umformeigenschaften insbesondere für das Tief- und Abstreckziehen aufweisen, um beispielsweise für die Herstellung von zweiteiligen Lebensmittel- und Getränkedosen geeignet zu sein. Weiterhin soll die Oberfläche des Verpackungsstahls möglichst gleichmäßig sein und ein ansprechendes Aussehen aufweisen. Beim Tief- und Abstreckziehen des Verpackungsstahls, beispielsweise bei der Herstellung von Dosen, soll weiterhin ein möglichst geringer Materialabrieb gewährleistet werden. Der Verpackungsstahl soll weiterhin beim Umformen in Tief- und Abstreckziehverfahren gute Gleiteigenschaften aufweisen und eine gute Haftung von organischen Beschichtungen, wie z.B. aus PP oder PET, oder organischen Lacken gewährleisten.

Diese Aufgaben werden mit dem Verfahren mit den Merkmalen des Anspruchs 1 gelöst. Bevorzugte Ausführungsbeispiele des Verfahrens sind den abhängigen Ansprüchen zu entnehmen.

In dem erfindungsgemäßen Verfahren wird ein kaltgewalztes Stahlblech aus einem un- oder niedriglegierten und insbesondere niedrig gekohlten Stahl, der bevorzugt einen Kohlenstoffgehalt von 0,01 - 0,1 Gew.-% aufweist, zunächst in einem ersten Schritt mit einer Silikatbeschichtung versehen und danach rekristallisierend geglüht, indem das Stahlblech mittels elektromagnetischer Induktion auf Temperaturen im Rekristallisationsbereich des Stahls und bevorzugt auf Temperaturen oberhalb der Acl-Temperatur, insbesondere im Temperaturbereich von 700°C - 850°C, bei einer Aufheizrate von mehr als 75 K/s erhitzt wird. Danach wird das Stahlblech in einem zweiten Schritt im noch erhitzten Zustand in ein schmelzflüssiges Aluminiumbad eingetaucht, um im Schmelztauchverfahren eine Aluminiumschicht auf das Stahlblech aufzubringen, wobei das Stahlblech beim Eintauchen in das Aluminiumbad eine Temperatur von wenigstens 700°C aufweist. Das Stahlblech wird dann in einem dritten Schritt aus dem Aluminiumbad herausgezogen und mit einer Kühlrate von mindestens 100 K/s abgeschreckt, indem das Stahlblech beispielsweise in ein Abschreckbad eingeleitet wird.

Durch die thermische Behandlung des Stahlblechs und insbesondere das rekristallisierende Glühen mittels elektromagnetischer Induktion bei einer sehr hohen Aufheizrate von mehr als 75 K/s und bevorzugt auf Temperaturen oberhalb der Acl-Temperatur sowie dem abschließenden Abschrecken des aluminierten Stahlblechs mit einer hohen Kühlrate von wenigstens 100 K/s bildet sich in dem Stahlblech ein mehrphasiges Gefüge aus, welches Ferrit und mindestens einen der Gefügebestandteile Martensit, Bainit und/oder Restaustenit umfasst. Bevorzugt besteht das mehrphasige Gefüge zu mehr als 80 % und besonders bevorzugt zu wenigstens 95 % aus den Gefügebestandteilen Ferrit, Martensit, Bainit und/oder Restaustenit. Ein solches Stahlblech mit einem mehrphasigen Gefüge zeichnet sich durch eine hohe Zugfestigkeit von mindestens 500 MPa und bevorzugt von mehr als 650 MPa sowie einer hohen Bruchdehnung von mehr als 5 % und bevorzugt von mehr als 10 % aus. Das aluminierte Stahlblech eignet sich aufgrund der hohen Festigkeit und Bruchdehnung hervorragend zur Herstellung von Verpackungen, beispielsweise mittels Tiefziehen und Abstreckziehen oder anderer geeigneter Umformtechniken.

Beim Schmelztauchen des Stahlblechs bildet sich im Grenzbereich zwischen der Stahlblechoberfläche und der durch das Schmelztauchen aufgebrachten Aluminiumschicht eine Legierungs-Zwischenschicht aus, welche durch eine ternäre Eisen-Aluminium-Silizium-Schicht gebildet wird. Diese Legierungsschicht gewährleistet eine hohe Haftung der Aluminiumschicht am Stahlblech. Zur Verbesserung der Haftung der Aluminiumschicht am Stahlblech wird dem schmelzflüssigen Aluminiumbad zweckmäßig Silizium zugegeben, insbesondere in einem Anteil von ca. 10 Gew.-%. Bevorzugt wird allerdings ein Aluminiumbad mit reinem Aluminium für das Schmelztauchen des Stahlblechs verwendet, wobei der Aluminiumgehalt des reinen Aluminiumbads wenigstens 98 Gew.-% und bevorzugt mehr als 99 Gew.-% und insbesondere ca. 99,5 Gew.-% aufweist. Erfindungsgemäß wird auf die Oberfläche des Stahlblechs vor dem rekristallisierenden Glühen eine Silikatbelegung aufgebracht, um eine gute Haftung und begrenzte Legierungsschichtdicke, der anschließend im Schmelztauchverfahren aufzubringenden Aluminiumschicht an der Stahlblechoberfläche zu gewährleisten. Zweckmäßig erfolgt das Aufbringen der Silikatbelegung auf die Oberfläche des Stahlblechs in einem Reinigungsschritt, der vor dem rekristallisierenden Glühen des Stahlblechs durchgeführt wird, indem das Stahlblech in ein silikathaltiges Reinigungsbad eingeleitet wird.

Die Dicke der im Schmelztauchverfahren auf das Stahlblech aufgebrachte Aluminiumschicht wird in dem Verfahren mittels einer Gasabstreifdüse eingestellt, mit der nach dem Herausziehen des Stahlblechs aus dem Aluminiumbad überschüssiges und noch schmelzflüssiges Aluminium von der Oberfläche abgestreift und insbesondere mit einem Gasstrom abgeblasen wird. Nach dem Abstreifen von überschüssigem Beschichtungsmaterial wird das aluminierte Stahlblech zum Abschrecken in ein Abschreckbad mit einer kühlen Abschreckflüssigkeit eingeleitet. Das Abschreckbad ist zweckmäßig durch einen mit Wasser gefüllten Tank gebildet. Hierbei können Kühlraten von mehr als 400 K/s erzielt werden. Auch eine Gasjetkühlung ist möglich mit Kühlraten von bis zu 300 K/s. Die Dicke der im Schmelztauchverfahren auf das Stahlblech aufgebrachte Aluminiumschicht kann so auf Schichtdicken im Bereich von 1 - 15 µm und bevorzugt zwischen 1 und 10 µm eingestellt werden.

Zur Vermeidung von Oxidationen an der Oberfläche des Stahlblechs bzw. der aufgebrachten Aluminiumbeschichtung erfolgt das Einleiten des erhitzten Stahlblechs in das Aluminiumbad und das Herausziehen aus dem Aluminiumbad in einer inerten, reduzierenden Atmosphäre, beispielsweise einer Schutzgasatmosphäre. Hierfür ist das Aluminiumbad zweckmäßig in einer Inertkammer mit einer Schutzgasatmosphäre angeordnet und das rekristallisierend geglühte Stahlblech wird aus einem Glühofen, insbesondere einem Durchlaufglühofen (D-Ofen), welcher ebenfalls eine inerte Atmosphäre besitzt, direkt in die Inertkammer eingeleitet und dort in das schmelzflüssige Aluminiumbad geführt. Auch nach dem Herausziehen des Stahlblechs aus dem Aluminiumbad wird das Stahlblech bis zum Einleiten in den Abschrecktank in einer inerten Atmosphäre gehalten, um die Ausbildung von Oxiden an der Oberfläche der aufgebrachten Aluminiumbeschichtung zu vermeiden.

Nach dem Abschrecken des aluminierten Stahlblechs wird dieses zweckmäßig dressiert oder nachgewalzt, wobei beim Dressieren bevorzugt ein Dressiergrad von 0,5 - 2 % und beim Nachwalzen ein Nachwalzgrad von mehr als 2 % und bis zu 50 % erzielt werden können. Unter Dressieren (bzw. Dressierwalzen) wird hierbei eine Druck-Behandlung der aluminiumbeschichteten Oberfläche des Stahlblechs durch Walzen oder Rollen verstanden, welche gegen die Oberfläche der Aluminiumbeschichtung gedrückt werden, wobei beim Dressieren eine nur unwesentliche Dickenreduktion des Stahlblechs von maximal 2 % erfolgt. Unter Nachwalzen wird demgegenüber eine Druck-Behandlung der aluminiumbeschichteten Oberfläche des Stahlblechs durch Walzen oder Rollen verstanden, bei der (ergänzend zu dem bereits vor dem Beschichten durchgeführten Kaltwalzen) eine wesentliche Dickenreduktion des Stahlblechs erzielt wird, welche zumindest größer als 2 % ist und bis zu 50 % betragen kann. Es ist dabei möglich, nach dem Beschichten des Stahlblechs mit Aluminium und dem Abschrecken entweder nur ein Dressieren (Dressierwalzen) oder nur ein Nachwalzen oder auch zunächst in einem Walzwerk ein Nachwalzen mit Nachwalzgraden im Bereich von 3 - 50 % und anschließend ein Dressieren mit einer feineren Dressierwalze durchzuführen. Durch das Dressieren oder Nachwalzen der aluminiumbeschichteten Oberfläche des Stahlblechs werden Aluminiumstrukturen auf der Oberfläche der Beschichtung eingeebnet und es werden störende Aluminiumoxide entfernt. Ferner wird durch das Dressieren oder Nachwalzen eine glänzende Oberfläche der Aluminiumbeschichtung erzeugt, welche insbesondere für die vorgesehene Verwendung der erfindungsgemäß hergestellten Bleche für die Herstellung von Verpackungen im Lebensmittelbereich von großer Bedeutung ist, da dort eine hohe Brillanz der Oberfläche des Verpackungsmaterials erwünscht ist. Im Vergleich zu bekannten Weißblechen erweist sich die Oberfläche des aluminierten Stahlblechs aufgrund der Helligkeit der Aluminiumbeschichtung attraktiver als die (dunklere) Zinnoberfläche eines Weißblechs. Das Dressieren oder Nachwalzen erzeugt darüber hinaus eine fein strukturierte Oberfläche der Aluminiumbeschichtung mit einer gleichmäßigen Beschaffenheit, welche eine gute Benetzbarkeit von Schmierstoffen und Lacken gewährleistet.

Durch das Dressieren oder Nachwalzen werden insbesondere an der Oberfläche der Aluminiumbeschichtung Aluminiumunebenheiten oder störende Aluminiumoxide entfernt, welche bei einer Lackierung oder Beschichtung der Oberfläche stören und zu Beschichtungs- bzw. Lackierfehlern führen können. Die erfindungsgemäß hergestellten aluminierten Stahlbleche eignen sich daher auch sehr gut für eine nachfolgende Lackierung, insbesondere mit organischen Lacken, oder für das Aufbringen einer organischen Beschichtung, beispielsweise aus PP oder PET. Es hat sich weiterhin gezeigt, dass durch das Dressieren oder Nachwalzen des aluminierten Stahlblechs die Oberfläche der Aluminiumbeschichtung eingeebnet und verdichtet wird, woraus eine geringere Neigung der Oberfläche für das Entstehen von unerwünschten Oxiden resultiert.

In einem zweckmäßigen Ausführungsbeispiel des erfindungsgemäßen Verfahrens wird das aluminierte Stahlblech nach dem Abschrecken einem Dressierschritt unterzogen, in dem die der Oberfläche des aluminierten Stahlblechs mittels feiner Dressierwalzen dressiert wird. Es hat sich gezeigt, dass durch den Dressierschritt die Festigkeit des aluminierten Stahlblechs erheblich erhöht werden kann, insbesondere auf Werte von 600 MPa bis 1000 MPa. Dabei ist es auch möglich, das aluminierte Stahlblech zunächst in einem Nachwalzschritt zu walzen, in dem zweckmäßig eine Dickenreduzierung des aluminierten Stahlblechs auf Nachwalzgrade von 4 % bis 45 % erfolgt und nach diesem Nachwalzschritt ein Dressieren mittels feinerer Dressierwalzen durchzuführen..

Das erfindungsgemäße Verfahren erweist sich als ressourcenschonend, weil das rekristallisierend geglühte Stahlblech unmittelbar nach dem Rekristallisationsglühen, bevorzugt in einer Inertkammer, in das schmelzflüssige Aluminiumbad eingeleitet wird, ohne dass vor dem Beschichten des Stahlblechs durch das Schmelztauchen in das Aluminiumbad eine Reinigung der Stahlblechoberfläche durch Spülen und Beizen erforderlich wäre. In bekannten Verfahren zur Beschichtung von Stahlblechen mit einer metallischen Beschichtung, beispielsweise in elektrolytischen Verzinnungsverfahren von Stahlblech, erfolgt nach dem Rekristallisationsglühen häufig zunächst zur Verbesserung des Umformverhaltens ein Nachwalzen, bei dem die Oberfläche des Stahlblechs kontaminiert wird und zur Beseitigung der Kontamination ein Spülen und Beizen durchgeführt wird, bevor das Stahlblech in einem Beschichtungsprozess (beispielsweise galvanisch oder durch Schmelztauchen) mit einer metallischen Beschichtung überzogen werden kann. Bei dem erfindungsgemäßen Verfahren kann auf diesen Reinigungsschritt vor dem Beschichten mit Aluminium verzichtet werden, da ein ggf. erforderliches Nachwalzen oder Dressieren des Stahlblechs erst nach dem Beschichten mit Aluminium erfolgt.

Die erfindungsgemäße Verfahrensführung ist auch unter energetischen Gesichtspunkten vorteilhaft, weil die Nachwärme des rekristallisierend geglühten Stahlblechs im nachfolgenden Beschichtungsschritt beim Eintauchen des Stahlblechs in das schmelzflüssige Aluminiumbad ausgenutzt werden kann. Das rekristallisierend geglühte Stahlband wird in noch heißem Zustand bei Temperaturen des Stahlblechs von wenigstens 700°C in das heiße Aluminiumbad eingeleitet, welches durch das Einleiten des heißen Stahlblechs zumindest auf Temperaturen oberhalb der Schmelztemperatur des Aluminiums (660°C) und bevorzugt in einem Temperaturbereich um 750°C gehalten werden kann.

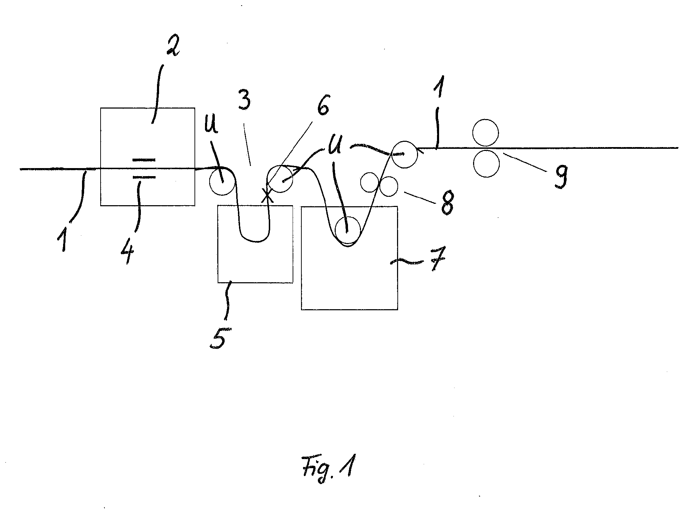

Diese und weitere Vorteile des erfindungsgemäßen Verfahrens und des erfindungsgemäß hergestellten Stahlblechs ergeben sich aus dem nachfolgend unter Bezugnahme auf die begleitende Zeichnung näher beschriebenen Ausführungsbeispiel. Die Zeichnung der **Figur 1** zeigt dabei eine schematische Darstellung einer Vorrichtung zur Durchführung des erfindungsgemäßen Verfahren.

Ein geeignetes Ausgangsmaterial für das erfindungsgemäße Verfahren ist ein warmgewalztes und un- oder niedriglegiertes Stahlblech mit einem geringen Kohlenstoffgehalt von bevorzugt weniger als 0,1 Gew.% und insbesondere zwischen 20 und 900 ppm Kohlenstoff. Die Legierungsbestandteile des Stahls genügen zweckmäßig den Vorgaben des internationalen Standards ASTM A 623-11 (Standard Specification for Tin Mill Products), wodurch eine Verwendung der erfindungsgemäß erzeugten Bleche zur Herstellung von Lebensmittelverpackungen sicher gestellt wird.

Grundsätzlich können für das erfindungsgemäße Verfahren alle Stahlsorten verwendet werden, welche eine für die Herstellung von Fein- oder Feinstblechen geeignete Zusammensetzung aufweisen. Als besonders geeignet haben sich aus Kostengründen un- oder niedriglegierte Stahlsorten erwiesen, welche neben einem niedrigen Kohlenstoffanteil noch weitere Legierungsbestandteile in niedrigen Konzentrationen aufweisen. Mittels der thermischen Behandlung gemäß der Erfindung lassen sich auch aus solchen Stahlsorten Stahlbleche mit einem mehrphasigen Gefüge herstellen, die sich durch eine hohe Festigkeit und Bruchdehung auszeichnen.

Der für die Herstellung des erfindungsgemäßen Stahlblechs verwendete Stahl weist zweckmäßig weniger als 0,5 Gew.-% und bevorzugt weniger als 0,4 Gew.% Mangan, weniger als 0,04 Gew.-% Silizium, weniger als 0,1 Gew.-% Aluminium und weniger als 0,1 Gew.-% Chrom auf. Der Stahl kann Legierungszusätze von Bor und/oder Niob und/oder Titan enthalten um die Festigkeit zu steigern, wobei die Zulegierung von Bor zweckmäßig im Bereich von 0,001-0,005 Gew.-% und die Zulegierung von Niob oder Titan im Bereich von 0,005-0,05 Gew.-% liegt. Bevorzugt werden dabei allerdings Gewichtsanteile für Nb < 0,03%.

Zur Herstellung von Ausführungsbeispielen des erfindungsgemäßen Stahlblechs zur Verwendung als Verpackungsstahl können bspw. im Stranggießen gefertigte und warmgewalzte sowie auf Coils gewickelte Stahlbänder aus niedrig gekohlten Stählen mit folgenden Obergrenzen (jew. in Gew.%) für die Anteile der Legierungsbestandteile verwendet werden:

| | |
|---|---|
| - C: | max. 0,1%; |
| - N: | max. 0,02 %; |
| - Mn: | max. 0,5 %, bevorzugt weniger als 0,4 %; |
| - Si: | max. 0,04 %, bevorzugt weniger als 0,02 %; |
| - Al: | max. 0,1 %, bevorzugt weniger als 0,05 %; |
| - Cr: | max. 0,1 %, bevorzugt weniger als 0,05 %; |
| - P: | max. 0,03 %; |
| - Cu: | max. 0,1 %; |
| - Ni: | max. 0,1 %; |
| - Sn: | max. 0,04 %; |
| - Mo: | max. 0,04 %; |
| - V: | max. 0,04 %; |
| - Ti: | max. 0,05 %, bevorzugt weniger als 0,02 %; |
| - Nb: | max. 0,05 %, bevorzugt weniger als 0,02 %; |
| - B: | max. 0,005 % |
| - und andere Legierungsbestandteile sowie Verunreinigungen: | max. 0,05 %, |
| - Rest Eisen. | |

Es wurde festgestellt, dass auf die Zulegierung von Legierungsbestandteilen, welche typischerweise in Dualphasenstählen enthalten sind, wie z. B. die Zulegierung von Mangan (welches typischerweise in den bekannten Dualphasenstählen einen Gewichtsanteil von 0,8-2,0 % hat), von Silizium (welches typischerweise in den bekannten Dualphasenstählen einen Gewichtsanteil von 0,1-0,5 % hat) und von Aluminium (welches in den bekannten Dualphasenstählen mit einem Gewichtsanteil von bis zu 0,2% zulegiert wird) verzichtet werden kann, wenn ein kaltgewalztes Stahlblech mit einem Kohlenstoffgehalt von weniger als 0,1 Gew.-% zunächst bei einer Aufheizrate von mehr als 75 K/s mittels elektromagnetischer Induktion rekristallisierend (bzw. austenitisierend) geglüht und später mit einer hohen Kühlrate von wenigstens 100 K/s und zweckmäßig mehr als 400 K/s abgeschreckt wird.

Das warmgewalzte Stahlband 1 wird in der in Figur 1 schematisch dargestellten Vorrichtung zur Durchführung des erfindungsgemäßen Verfahrens als Endlosband von einer (hier nicht dargestellten) Transporteinrichtung mit einer Transportgeschwindigkeit von bevorzugt mehr als 200 m/min und bis zu 750 m/min kontinuierlich im Durchlauf bewegt und zunächst in einem Vorbehandlungsschritt durch Beizen, Spülen und Trocknen gereinigt und anschließend in einer (hier nicht dargestellten) Kaltwalzeinrichtung kaltgewalzt. In dem Kaltwalzschritt wird die Dicke des Stahlbands auf Werte von weniger als 1,0 mm (Feinblech) oder im Bereich von 0,05 bis 0,5 mm (Feinstblech) reduziert.

Nach dem Kaltwalzen wird das Stahlband in einem Vorbehandlungsschritt durch ein Reinigungsbad geleitet. Zweckmäßig enthält das Reinigungsbad ein Silikat, um die Oberfläche des Stahlbands in dem Vorbehandlungsschritt mit einer Silikatbelegung zu versehen. Eine geeignete Zusammensetzung des Reinigungsbads enthält bspw. Natronlauge in einer Konzentration von ca. 20 g/l, Silizium in einer Konzentration von 3 - 10 g/l sowie zusätzlich ein Netzmittel. Die so aufgebrachte Silikatbelegung enthält bevorzugt eine Siliziumauflage von 3 - 10 mg/m² (Si-Anteil). Die Silikatauflage kann auch in einem gesonderten Verfahrensschritt aufgebracht werden, das Aufbringen der Silikatauflage in einem Vorbehandlungsschritt, in dem das Stahlblech auch gereinigt wird, erweist sich jedoch aus Effizienzgründen als vorteilhaft.

Nach dem Kaltwalzen und dem Reinigen wird das gereinigte Stahlband 1 - wie in Figur 1 schematisch dargestellt - mit der Transportgeschwindigkeit durch einen Ofen 2, insbesondere durch einen Durchlaufglühofen mit einer Induktionsheizung, geführt. In dem Ofen 2 ist eine Heizeinrichtung 4, insbesondere eine Induktionsheizung mit Induktionsspulen angeordnet. In der Heizeinrichtung 4 wird das Stahlband, bevorzugt in einer inerten Schutzgasatmosphäre, induktiv bei einer Aufheizrate von mehr als 75 K/s auf Temperaturen im Rekristallisationsbereich des verwendeten Stahls und insbesondere im Bereich von 700°C bis 850°C und bevorzugt auf ca. 750°C erhitzt, um das kaltgewalzte Stahlband 1 rekristallisierend zu Glühen. In Verbindung mit dem danach noch erfolgenden Abschrecken des Stahlblechs, läßt sich durch das rekristallisierende Glühen eine mehrphasige Gefügestruktur im Stahl ausbilden, welche zu hohen Festigkeiten und einer hohen Bruchdehnung führt.

An den Ofen 2 schließt sich stromabwärts eine Inertkammer 3 an. Die Inertkammer 3 ist mit einem inerten, reduzierenden Gas, beispielsweise einem Schutzgas wie Stickstoff, Argon oder HNx gefüllt. In der Inertkammer 3 ist ein Tank 5 angeordnet, der mit einem schmelzflüssigen Aluminiumbad gefüllt ist. Das schmelzflüssige Aluminiumbad weist zumindest eine Temperatur oberhalb der Schmelztemperatur des Aluminium (660°C) und bevorzugt eine Temperatur von mehr als 700°C auf. Die Einhaltung von bevorzugten Badtemperaturen des Aluminiumbads von mehr als 700°C und besonders bevorzugt von ca. 750°C ist dabei für die gewünschte Ausbildung einer mehrphasigen Gefügestruktur im Stahlblech zweckdienlich. Bei dem Aluminiumbad handelt es sich in einem Ausführungsbeispiel der Erfindung um ein Bad mit reinem, schmelzflüssigem Aluminium, wobei der Aluminiumgehalt wenigstens 98 und bevorzugt mehr als 99% beträgt. In einem bevorzugten Ausführungsbeispiel liegt der Aluminiumgehalt des Aluminiumbads bei ca. 99,5%.

In einem alternativen Ausführungsbeispiel kann es sich bei dem schmelzflüssigen Aluminiumbad auch um eine Aluminium-Legierung handeln, welche neben dem Hauptbestandteil Aluminium noch einen Anteil von Silizium im Bereich von 5 bis 13% und bevorzugt von 9 bis 11% und ggf. weitere Anteile enthält. In einer bevorzugten Ausführungsvariante enthält das Aluminiumbad 10% Silizium, 3% Eisen und der Rest besteht aus Aluminium. Auch die Zugabe von weiteren Legierungsbestandteilen, wie z.B. Magnesium mit einem Gewichtsanteil von 0,2 - 6 %, ist hierbei möglich.

Stromabwärts des mit dem schmelzflüssigen Aluminiumbad gefüllten Tanks 5 ist eine Gasabstreifdüse 6 angeordnet. Mit der Gasabstreifdüse 6 wird noch schmelzflüssiges und überschüssiges Aluminium von der Oberfläche des Stahlblechs 1 abgestreift und insbesondere mittels eines Gasstroms abgeblasen. Mittels der Gasabstreifdüse 6 kann die Überzugsdicke der Aluminiumbeschichtung auf gewünschte Werte im Bereich von 1 bis 15µm eingestellt werden. Dies erfolgt zweckmäßig durch druckgeregeltes Aufblasen eines inerten Gases, wie z.B. Stickstoff, auf beide Seiten des aluminiumbeschichteten Stahlbands 1 über die gesamte Bandbreite, wodurch überschüssiges Aluminium abgestreift wird. Ein geschlossener Regelkreis gewährleitstet dabei eine gleichmäßige Aluminiumauflage über die gesamte Bandbreite und Bandlänge. Dabei kann auch eine unterschiedliche Aluminiumauflage auf den beiden Seiten des Stahlbands 1 (mit einer Differenzauflage) eingestellt werden.

Das aus dem Ofen 2 kommende Stahlband 1 wird zunächst in die Inertkammer 3 geführt und dort unter Umlenkung um eine Unlenkrolle U in den Tank 5 mit dem Aluminiumbad geleitet und wieder aus dem Aluminiumbad heraus gezogen. Nach Umlenkung des Stahlbands 1 um eine weitere Unlenkrolle U wird das dann aluminiumbeschichtete Stahlblech 1 in einen mit einem Kühlfluid, insbesondere einer Abschreckflüssigkeit wie Wasser, gefüllten Abschrecktank 7 geleitet. Dadurch wird das Stahlband 1 mit hohen Abschreckraten von bevorzugt mehr als 400K/s auf Raumtemperatur abgekühlt. Das Abkühlen des Stahlbands kann auch mittels eines Gasstroms erfolgen.

Stromabwärts des Abschrecktanks 7 läuft das gekühlte Stahlband 1 durch ein Paar von Abquetschrollen 8, welche die anhaftende Abschreckflüssigkeit von der Oberfläche des aluminiumbeschichteten Stahlbands 1 abquetscht. Nach dem Abquetschen der Abschreckflüssigkeit kann erforderlichenfalls ein Trocknen erfolgen. Nach einer weiteren Umlenkung um eine Umlenkrolle U wird das aluminierte und abgekühlte Stahlband 1 in ein Dressiergerüst oder ein Nachwalzwerk 9 geführt. In dem Dressiergerüst bzw. dem Nachwalzwerk 9 wird die aluminiumbeschichtete Oberfläche des Stahlbands 1 dressiert oder nachgewalzt, wobei beim Dressieren bevorzugt ein Dressiergrad von 0,5 bis 2% und bei einem Nachwalzen ein Nachwalzgrad von mehr als 2% und bis zu 50% erzielt werden kann. Dabei ist es nicht erforderlich, die Gerüste für das Walzen bzw. Dressieren in einer Linie mit der Aluminiumbeschichtung anzuordnen, d.h. das Nachwalzwerk oder die Dressiergerüste können auch jeweils separat von der Anlage zur Tauchbeschichtung des Stahlblechs aufgebaut sein.

Durch das Dressieren oder Nachwalzen werden Aluminiumoxide an der Aluminiumbeschichtung entfernt. Um eine erneute Oxidation der Aluminiumbeschichtung nach dem Dressieren oder Nachwalzen zu verhindern, kann zweckmäßig eine Passivierung der aluminiumbeschichteten Oberfläche des Stahlbands erfolgen. Eine möglichst oxidfreie Oberfläche des aluminierten Stahlbands gewährleitstet gute Gleiteigenschaften beim Umformen, beispielsweise in Tief- und Abstreckziehverfahren, weshalb dabei der erforderliche Einsatz von Schmierstoffen gering gehalten werden kann.

Im Vergleich zu Weißblechen mit einer verzinkten Oberfläche weist das erfindungsgemäß aluminierte Stahlband allerdings reduzierte Gleiteigenschaften auf. Zur Verbesserung der Gleiteigenschaften des aluminierten Stahlblechs in nachfolgenden Verarbeitungsverfahren ist daher in der Regel die Verwendung von Schmierstoffen, wie z.B. DOS (Dioctylsebacat) erforderlich.

Der in nachfolgenden Umformverfahren üblicherweise auftretende Aluminiumabrieb, der beispielsweise bei der Herstellung von Dosen aus aluminiertem Stahlblech in Tief- und Abstreckziehverfahren auftritt, kann bei dem erfindungsgemäßen Stahlblech minimiert werden, indem in einem abschließenden Dressierschritt ein trockenes Glanzdressieren der aluminiumbeschichteten Oberfläche erfolgt, wodurch eine hohe Verdichtung der Aluminiumbeschichtung erzielt werden kann, welche den Abrieb von Aluminium in Umformverfahren minimiert.

Beim Übergang des im Ofen 2 erhitzten und rekistallisierend geglühten Stahlbands 1 vom Ofen 2 in das Aluminiumbad (Tank 5) wird das Stahlband 1 bevorzugt in einer inerten Schutzgasatmosphäre gehalten, ohne dass die Oberfläche des erhitzen Stahlbands 1 mit Luftsauerstoff in Kontakt kommt. Beim Einleiten des Stahlbands 1 in das schmelzflüssige Aluminiumbad weist das Stahlband eine Temperatur von mehr als 700°C auf.

Auch beim Übergang vom schmelzflüssigen Aluminiumbad in den Abschrecktank 7 wird das dann mit der Aluminiumbeschichtung versehene Stahlband 1 in der inerten Schutzgasatmosphäre der Inertkammer 3 geführt, ohne dass die (teilweise noch schmelzflüssige) Aluminiumbeschichtung mit Luftsauerstoff in Kontakt kommen kann. Dadurch wird sowohl eine Oxidation der noch unbeschichteten und gereinigten Stahlbandoberfläche als auch der im Aluminiumbad aufgebrachten Aluminiumbeschichtung verhindert.

Die erfindungsgemäß hergestellten aluminierten Stahlbleche zeigen hervorragende Umformeigenschaften, bspw. in Tief- und Abstreckziehverfahren, für die Herstellung von zweiteiligen Lebensmittel- und Getränkedosen oder von Deckeln.

## Patentansprüche

1. Verfahren zur Herstellung eines aluminierten Verpackungsstahls aus einem kaltgewalzten Stahlblech aus einem un- oder niedriglegierten Stahl mit folgenden Schritten:
- Aufbringen einer Silikatbeschichtung auf das Stahlblech oder Durchleiten des Stahlblechs durch ein Reinigungsbad, in dem eine Silikatbeschichtung auf das Stahlblech aufgebracht wird,
- Erhitzen des mit der Silikatbeschichtung beschichteten Stahlblechs durch elektromagnetische Induktion auf Temperaturen im Rekristallisationsbereich des Stahls bei einer Aufheizrate von mehr als 75 K/s, um das Stahlblech rekristallisierend zu glühen,
- Eintauchen des rekristallisierend geglühten Stahlblech in ein schmelzflüssiges Aluminiumbad, um eine Aluminiumschicht auf das Stahlblech aufzubringen, wobei das Stahlblech beim Eintauchen in das Aluminiumbad eine Temperatur von wenigstens 700°C aufweist,
- Herausziehen des Stahlblechs aus dem Aluminiumbad und Abkühlen des aluminierten Stahlblechs mit einer Kühlrate von mindestens 100 K/s.

2. Verfahren nach Anspruch 1, **dadurch gekennzeichnet, dass** sich beim Abkühlen des aluminierten Stahlblechs in dem Stahl ein mehrphasiges Gefüge ausbildet, welches Ferrit und mindestens einen der Gefügebestandteile Martensit, Bainit und/oder Restaustenit umfasst, wobei das mehrphasige Gefüge bevorzugt zu mehr als 80% und besonders bevorzugt zu wenigstens 95% aus den Gefügebestandteilen Ferrit, Martensit, Bainit und/oder Restaustenit besteht.

3. Verfahren nach einem der voranstehenden Ansprüche, **dadurch gekennzeichnet, dass** das Stahlblech nach dem Herausziehen aus dem Aluminiumbad in eine Abschreckflüssigkeit eingetaucht oder mit einem Gasstrom abgekühlt wird, wobei die Kühlrate, mit der das Stahlblech nach dem Aufbringen der Aluminiumschicht abgekühlt wird, vorzugsweise größer als 400 K/s und besonders bevorzugt größer als 500 K/s ist.

4. Verfahren nach einem der voranstehenden Ansprüche, **dadurch gekennzeichnet, dass** das Stahlblech aus einem niedriglegierten Stahl mit einem Kohlenstoffanteil von 0,01 bis 0,1 Gew.% und folgenden Obergrenzen für den Gewichtsanteil der weiteren Legierungsbestandteile gefertigt ist:
| | |
|---|---|
| - N: | max. 0,02 %, |
| - Mn: | max. 0,4 %, |
| - Si: | max. 0,04 %, |
| - Al: | max. 0,1 %, |
| - Cr: | max. 0,1 %, |
| - P: | max. 0,03 %, |
| - Cu: | max. 0,1 %, |
| - Ni: | max. 0,1 %, |
| - Sn: | max. 0,04 %, |
| - Mo: | max. 0,04 % |
| - V: | max. 0,04 %; |
| - Ti: | max. 0,05 %, bevorzugt weniger als 0,02 %; |
| - Nb: | max. 0,05 %, bevorzugt weniger als 0,02 %; |
| - B: | max. 0,005 %, |
| - andere Legierungsbestandteile, einschl. Verunreinigungen:max. 0,05 %, | |
| - Rest Eisen. | |

5. Verfahren nach einem der voranstehenden Ansprüche, **dadurch gekennzeichnet, dass** das Stahlblech beim rekristallisierenden Glühen induktiv auf Temperaturen im Bereich von 700°C bis 780°C, bevorzugt oberhalb der Ac1-Temperatur und insbesondere auf 740°C bis 760°C erhitzt wird.

6. Verfahren nach einem der voranstehenden Ansprüche, **dadurch gekennzeichnet, dass** das schmelzflüssige Aluminiumbad eine Aluminiumlegierung mit einem Siliziumanteil von 5 bis 13 Gew.% und bevorzugt von 9 bis 11 Gew.% oder zumindest im Wesentlichen aus reinem Aluminium besteht und bevorzugt einen Aluminiumgehalt von wenigstens 98 und besonders bevorzugt von wenigstens 99 Gew.% und insbesondere von 99,5 Gew.% enthält.

7. Verfahren nach einem der voranstehenden Ansprüche, **dadurch gekennzeichnet, dass** das Stahlblech aus einem niedriglegierten Stahl mit einem Kohlenstoffanteil von 0,01 bis 0,1 Gew.%, einem Mangananteil von weniger als 0,5 Gew.-%, einem Siliziumanteil von weniger als 0,04 Gew.-%, einem Aluminiumanteil von weniger als 0,1 Gew.-% und einem Chromanteil von weniger als 0,1 Gew.-% gefertigt ist.

8. Verfahren nach einem der voranstehenden Ansprüche, **dadurch gekennzeichnet, dass** die Dicke der aufgebrachten Aluminiumschicht (einschl. einer Legierungszwischenschicht) zwischen 1 und 15 µm und bevorzugt zwischen 1 und 10 µm beträgt.

9. Verfahren nach einem der voranstehenden Ansprüche, **dadurch gekennzeichnet, dass** nach dem Herausziehen des Stahlblechs aus dem Aluminiumbad überschüssiges und noch schmelzflüssiges Aluminium mittels einer Gasabstreifdüse abgestreift bzw. abgeblasen wird, um die Dicke der aufgebrachten Aluminiumschicht auf einen gewünschten Wert einzustellen und über der Oberfläche des Stahlblechs zu vergleichmäßigen.

10. Verfahren nach einem der voranstehenden Ansprüche, **dadurch gekennzeichnet, dass** das Stahlblech nach dem Abkühlen dressiert und/oder kalt nachgewalzt wird, wobei beim Dressieren bevorzugt ein Dressiergrad von 0,5 - 2,0 % und/oder beim Nachwalzen ein Nachwalzgrad von mehr als 2% und bis zu 50% erzielt wird.

11. Verfahren nach einem der voranstehenden Ansprüche, **dadurch gekennzeichnet, dass** das rekristallisierende Glühen, das Aufbringen Aluminiumschicht und das Abschrecken des aluminierten Stahlblechs jeweils in einer inerten, reduzierenden Atmosphäre erfolgt, wobei bevorzugt das schmelzflüssige Aluminiumbad und ein Abschrecktank in einer Inertkammer mit einer Schutzgasatmosphäre angeordnet sind und das Stahlblech nach dem rekristallisierenden Glühen in die Inertkammer geführt und dort in das schmelzflüssige Aluminiumbad geleitet und danach aus dem Aluminiumbad herausgezogen und in den Abschrecktank geführt wird.

12. Verfahren nach einem der voranstehenden Ansprüche, **dadurch gekennzeichnet, dass** es sich bei dem Stahlblech um kaltgewalztes Fein- oder Feinstblech aus einem niedriglegierten Stahl handelt, der Bor und/oder Niob und/oder Titan enthält.

13. Verfahren nach einem der voranstehenden Ansprüche, **dadurch gekennzeichnet, dass** das Stahlblech nach dem Abkühlen eine Zugfestigkeit von mindestens 500 MPa, bevorzugt von mehr als 650 MPa, und eine Bruchdehnung von mehr als 5%, bevorzugt von mehr als 10% aufweist.

14. Verfahren nach einem der voranstehenden Ansprüche, **dadurch gekennzeichnet, dass** das rekristallisierende Glühen in einem Zeitintervall von 0,5 bis 1,5 Sekunden, bevorzugt von ca. 1 Sekunde erfolgt.

15. Verwendung eines aluminierten Stahlblechs, welches mit einem Verfahren nach einem der voranstehenden Ansprüche hergestellt worden ist, als Verpackungsstahl, insbesondere zur Herstellung von Dosen für Lebensmittel, Getränke und sonstige Füllgüter wie chemische oder biologische Produkte sowie zur Herstellung von Aerosoldosen und Verschlüssen.

## Claims

1. Method for producing an aluminised packaging steel from a cold-rolled steel sheet made from an unalloyed or low-alloy steel having the following steps:
- applying a silicate coating to the steel sheet or passing the steel sheet through a cleaning bath, in which a silicate coating is applied to the steel sheet,
- heating the steel sheet coated with the silicate coating by electromagnetic induction at temperatures in the recrystallisation range of steel at a heating rate of more than 75 K/s to anneal the steel sheet in recrystallising manner,
- dipping the steel sheet annealed in recrystallising manner into a molten aluminium bath to apply an aluminium layer onto the steel sheet, wherein the steel sheet has a temperature of at least 700°C when dipped into the aluminium bath,
- withdrawing the steel sheet from the aluminium bath and cooling the aluminised steel sheet at a cooling rate of at least 100 K/s.

2. Method according to claim 1, **characterised in that** when cooling the aluminised steel sheet, a multi-phase structure is formed in the steel which comprises ferrite and at least one of the structural constituents martensite, bainite and/or retained austenite, wherein the multi-phase structure consists preferably of more than 80 % and particularly preferably of at least 95 % of the structural constituents ferrite, martensite, bainite and/or retained austenite.

3. Method according to one of the preceding claims, **characterised in that** after withdrawing from the aluminium bath, the steel sheet is dipped into a quenching liquid or cooled using a gas stream, wherein the cooling rate at which the steel sheet is cooled after applying the aluminium layer, is preferably greater than 400 K/s and particularly preferably greater than 500 K/s.

4. Method according to one of the preceding claims, **characterised in that** the steel sheet is made from a low-alloy steel with a carbon content of 0.01 to 0.1 wt.% and the following upper limits for the weight content of the further alloying constituents:
| | |
|---|---|
| - N: | maximum 0.02 %, |
| - Mn: | maximum 0.4 %, |
| - Si: | maximum 0.04 %, |
| - Al: | maximum 0.1 %, |
| - Cr: | maximum 0.1 %, |
| - P: | maximum 0.03 %, |
| - Cu: | maximum 0.1 %, |
| - Ni: | maximum 0.1 %, |
| - Sn: | maximum 0.04 %, |
| - Mo: | maximum 0.04 % |
| - V: | maximum 0.04 %; |
| - Ti: | maximum 0.05 %, preferably less than 0.02 %; |
| - Nb: | maximum 0.05 %, preferably less than 0.02 %; |
| - B: | maximum 0.005 %, |
| - other alloying constituents, including impurities: maximum 0.05 %, | |
| - remainder iron. | |

5. Method according to one of the preceding claims, **characterised in that** the steel sheet is heated during recrystallising annealing inductively at temperatures in the range from 700°C to 780°C, preferably above the Acl temperature and in particular at 740°C to 760°C.

6. Method according to one of the preceding claims, **characterised in that** the molten aluminium bath contains an aluminium alloy having a silicon content of 5 to 13 wt.% and preferably of 9 to 11 wt.%, or consists at least substantially of pure aluminium, and preferably an aluminium content of at least 98 and particularly preferably of at least 99 wt.% and in particular of 99.5 wt.%.

7. Method according to one of the preceding claims, **characterised in that** the steel sheet is made from a low-alloy steel having a carbon content of 0.01 to 0.1 wt.%, a manganese content of less than 0.5 wt.%, a silicon content of less than 0.04 wt.%, an aluminium content of less than 0.1 wt.% and a chromium content of less than 0.1 wt.%.

8. Method according to one of the preceding claims, **characterised in that** the thickness of the applied aluminium layer (including an alloy intermediate layer) is between 1 and 15 µm and preferably between 1 and 10 µm.

9. Method according to one of the preceding claims, **characterised in that** after withdrawing the steel sheet from the aluminium bath, excess and still molten aluminium is stripped off or blown off by means of a gas stripping jet to adjust the thickness of the applied aluminium layer to a required value and to make it uniform over the surface of the steel sheet.

10. Method according to one of the preceding claims, **characterised in that** after cooling, the steel sheet is temper pass rolled and/or cold re-rolled, wherein during temper pass rolling, a degree of temper pass rolling of 0.5 - 2.0 % is preferably achieved and/or during re-rolling, a degree of re-rolling of more than 2 % and up to 50 %.

11. Method according to one of the preceding claims, **characterised in that** the recrystallising annealing, the application of aluminium layer and the quenching of the aluminised steel sheet is effected in each case in an inert reducing atmosphere, wherein the molten aluminium bath and a quenching tank are preferably arranged in an inert chamber with a protective gas atmosphere and the steel sheet is guided into the inert chamber after recrystallising annealing and passed into the molten aluminium bath there and then withdrawn from the aluminium bath and guided into the quenching tank.

12. Method according to one of the preceding claims, **characterised in that** the steel sheet is a cold-rolled fine or very fine sheet made of a low-alloy steel which contains boron and/or niobium and/or titanium.

13. Method according to one of the preceding claims, **characterised in that** after cooling, the steel sheet has a tensile strength of at least 500 MPa, preferably of more than 650 MPa, and an elongation at break of more than 5%, preferably of more than 10%.

14. Method according to one of the preceding claims, **characterised in that** the recrystallising annealing is effected over a time interval of 0.5 to 1.5 seconds, preferably of about 1 second.

15. Use of an aluminised steel sheet, which has been produced by a method according to one of the preceding claims, as packaging steel, in particular for the production of cans for foodstuffs, drinks and other filling materials, such as chemical or biological products, and for the production of aerosol cans and closures.

## Revendications

1. Procédé de fabrication d'un acier aluminé pour emballage en une tôle d'acier laminée à froid en un acier non allié ou faiblement allié avec les étapes suivantes :
- application d'un revêtement de silicate sur la tôle d'acier ou passage de la tôle d'acier par un bain de nettoyage, dans lequel un revêtement de silicate est appliqué sur la tôle d'acier,
- chauffage de la tôle d'acier revêtue avec le revêtement de silicate par induction électromagnétique à des températures dans la plage de recristallisation de l'acier à une vitesse de chauffage de plus de 75 K/s, pour recuire la tôle d'acier par recristallisation,
- immersion de la tôle d'acier recuite par recristallisation dans un bain d'aluminium fondu, pour appliquer une couche d'aluminium sur la tôle d'acier, dans lequel la tôle d'acier présente une température d'au moins 700 °C lors de l'immersion dans le bain d'aluminium,
- extraction de la tôle d'acier du bain d'aluminium et refroidissement de la tôle d'acier aluminée à une vitesse de refroidissement d'au moins 100 K/s.

2. Procédé selon la revendication 1, **caractérisé en ce qu'**une structure multiphasée se forme dans l'acier lors du refroidissement de la tôle d'acier aluminée, laquelle comprend de la ferrite, et au moins un des composants de structure martensite, bainite et/ou austénite résiduelle, dans lequel la structure multiphasée se compose de préférence à plus de 80 % et de manière particulièrement préférée à au moins 95 % des composants de structure ferrite, martensite, bainite et/ou austénite résiduelle.

3. Procédé selon l'une quelconque des revendications précédentes, **caractérisé en ce que** la tôle d'acier après l'extraction du bain d'aluminium est plongée dans un fluide de trempage et refroidie avec un flux de gaz, dans lequel la vitesse de refroidissement, à laquelle la tôle d'acier est refroidie après l'application de la couche d'aluminium, est de préférence supérieure à 400 K/s et de manière particulièrement préférée supérieure à 500 K/s.

4. Procédé selon l'une quelconque des revendications précédentes, **caractérisé en ce que** la tôle d'acier est fabriquée en un acier faiblement allié avec une teneur en carbone de 0,01 à 0,1 % en poids et les limites supérieures suivantes pour la teneur en poids des autres composants d'alliage :
- N : max 0,02 %,
- Mn : max 0,4 %,
- Si : max 0,04 %,
- Al : max 0,1 %,
- Cr : max 0,1 %,
- P : max 0,03 %,
- Cu : max 0,1 %,
- Ni : max 0,1 %,
- Sn : max 0,04 %,
- Mo : max 0,04 %
- V : max 0,04 % ;
- Ti : max 0,05 %, de préférence inférieur à 0,02 % ;
- Nb : max 0,05 %, de préférence inférieur à 0,02 % ;
- B : max 0,005 %,
- autres composants d'alliage, y compris impuretés : max 0,05 %,
- résidu fer.

5. Procédé selon l'une quelconque des revendications précédentes, **caractérisé en ce que** la tôle d'acier est chauffée lors du recuit par recristallisation par induction à des températures dans la plage de 700 °C à 780 °C, de préférence supérieures à la température Ac1 et en particulier à 740 °C à 760 °C.

6. Procédé selon l'une quelconque des revendications précédentes, **caractérisé en ce que** le bain d'aluminium fondu contient un alliage d'aluminium avec une teneur en silicium de 5 à 13 % en poids et de préférence de 9 à 11 % en poids ou est constitué au moins sensiblement d'aluminium pur et de préférence d'une teneur en aluminium d'au moins 98 et de manière particulièrement préférée d'au moins 99 % en poids et en particulier de 99,5 % en poids.

7. Procédé selon l'une quelconque des revendications précédentes, **caractérisé en ce que** la tôle d'acier est fabriquée en un acier faiblement allié avec une teneur en carbone de 0,01 à 0,1 % en poids, une teneur en manganèse inférieure à 0,5 % en poids, une teneur en silicium inférieure à 0,04 % en poids, une teneur en aluminium inférieure à 0,1 % en poids et une teneur en chrome inférieure à 0,1 % en poids.

8. Procédé selon l'une quelconque des revendications précédentes, **caractérisé en ce que** l'épaisseur de la couche d'aluminium appliquée (y compris une couche intermédiaire d'alliage) est entre 1 et 15 µm et de préférence entre 1 et 10 µm.

9. Procédé selon l'une quelconque des revendications précédentes, **caractérisé en ce qu'**après l'extraction de la tôle d'acier du bain d'aluminium, l'aluminium excédentaire et encore fluide est raclé ou soufflé au moyen d'une buse de raclage à gaz, pour régler l'épaisseur de la couche d'aluminium appliquée à une valeur souhaitée et l'égaliser sur la surface de la tôle d'acier.

10. Procédé selon l'une quelconque des revendications précédentes, **caractérisé en ce que** la tôle d'acier est dressée et/ou à nouveau laminée à froid après le refroidissement, dans lequel lors du dressage de préférence un degré de dressage de 0,5 - 2 % et/ou lors du laminage un degré de laminage de plus de 2 % et jusqu'à 50 % est visé.

11. Procédé selon l'une quelconque des revendications précédentes, **caractérisé en ce que** le recuit par recristallisation, l'application de couche d'aluminium et le trempage de la tôle d'acier aluminée a lieu respectivement dans une atmosphère réduite, inerte, dans lequel de préférence le bain d'aluminium fondu et une cuve de trempage sont agencés dans une chambre inerte avec une atmosphère de gaz de protection et la tôle d'acier est guidée après le recuit par recristallisation dans la chambre inerte et y est guidée dans le bain d'aluminium fondu et ensuite extraite du bain d'aluminium et est guidée dans la cuve de trempage.

12. Procédé selon l'une quelconque des revendications précédentes, **caractérisé en ce que** la tôle d'acier est une tôle fine ou très fine en un acier faiblement allié, qui contient du bore et/ou du niobium et/ou du titane.

13. Procédé selon l'une quelconque des revendications précédentes, **caractérisé en ce que** la tôle d'acier présente après le refroidissement, une résistance à la traction d'au moins 500 MPa, de préférence de plus de 650 MPa, et un allongement de rupture de plus de 5 %, de préférence de plus de 10 %.

14. Procédé selon l'une quelconque des revendications précédentes, **caractérisé en ce que** le trempage par recristallisation a lieu dans un intervalle de temps de 0,5 à 1,5 seconde, de préférence d'environ 1 seconde.

15. Utilisation d'une tôle d'acier aluminée, laquelle a été fabriquée avec un procédé selon l'une quelconque des revendications précédentes, en tant qu'acier pour emballage, en particulier pour la fabrication de boites pour aliments, boissons et autres matériaux de remplissage tels que des produits chimiques ou biologiques ainsi que pour la fabrication d'aérosols et de bouchons.
